# FASCICULE DE BREVET EUROPEEN

(11) **EP 4 094 192 B1**
(45) Date de publication et mention de la délivrance du brevet: **11.03.2026**
(21) Numéro de dépôt: 21718935.6
(22) Date de dépôt: 16.03.2021
(51) Int. Cl.: G06K 19/07

(54) **CIRCUIT POUR ÉTIQUETTE DE RADIO-IDENTIFICATION PASSIVE COMPRENANT UN CAPTEUR DE CONTRAINTE ET PROCÉDÉ POUR FABRIQUER UN CIRCUIT**
SCHALTUNG FÜR PASSIVE RADIOFREQUENZIDENTIFIKATION MIT EINEM DEHNUNGSSENSOR UND VERFAHREN ZUR HERSTELLUNG EINER SCHALTUNG
CIRCUIT FOR PASSIVE RADIO-FREQUENCY IDENTIFICATION TAG COMPRISING A STRAIN SENSOR AND METHOD FOR MANUFACTURING A CIRCUIT

(30) Priorité: 18.03.2020 FR 2002676
(43) Date de publication de la demande: 30.11.2022
(73) Titulaire: ASYGN, 38000 Grenoble (FR)
(72) Inventeur: GEYNET, Lionel, 30250 AUBAIS (FR); DELORME, Nicolas, 38000 GRENOBLE (FR)
(74) Mandataire: Cabinet Beau de Loménie
(86) Numéro de dépôt international: PCT/FR2021/050437
(87) Numéro de publication internationale: WO 2021/186128

(56) Documents cités:
- WO-A1-00/45331
- WO-A1-2019/005043
- US-A1- 2007 096 880
- US-A1- 2015 347 791
- US-B2- 7 495 558

## Description

### Domaine Technique

L'invention est relative à des dispositifs sans contact, par exemple de type RFID, comprenant des capteurs pour enregistrer des événements sur une longue durée sans nécessiter une alimentation électrique externe. L'invention est notamment relative à des circuits pour étiquette de radio-identification passive fonctionnant dans une bande UHF, configurés pour une communication radio avec un lecteur qui émet un signal de lecture périodique, dans lequel une période du signal de lecture comprend une phase de récupération de l'énergie et une phase de communication.

### Technique antérieure

De manière connue dans l'état de la technique, un circuit du type RFID (de l'anglais « Radio Frequency Identification ») peut servir comme radio-étiquette (ou « RFID tag» en anglais) appelé également marqueur et est associé à un objet à surveiller. Le circuit comprend ou est connecté optionnellement par une interface avec un capteur pour mesurer au moins certains paramètres physiques relatifs à cet objet comme par exemple la température ambiante, l'humidité ou encore l'accélération.

Le circuit se présente généralement sous la forme d'une étiquette autocollante collée sur l'objet à surveiller ou d'un dispositif intégré dans l'objet à surveiller. L'objet à surveiller est par exemple un équipement industriel, une marchandise, un produit ou un organisme vivant dont la surveillance à travers au moins un paramètre physique mesuré est nécessaire.

De manière générale, un tel dispositif sans contact comporte un module de mémorisation apte à stocker des mesures acquises par le module de mesure, une antenne apte à transmettre ces mesures à un interrogateur via des signaux électromagnétiques et une source d'énergie électrique permettant d'alimenter notamment le module de mesure.

Un tel système comprend classiquement un lecteur ou interrogateur RFID et un dispositif sans contact comprenant un circuit (ou tag) RFID (ou une pluralité de circuits) attaché ou fixé à l'objet à suivre. Le lecteur RFID émet généralement un signal UHF, appelé signal d'interrogation, à destination du circuit RFID. L'utilisation de signaux UHF présente les avantages suivants: vitesse de communication élevée, possibilité de communiquer avec un grand nombre de tags simultanément.

Pour ce but le dispositif sans contact comprend un ou plusieurs capteurs pour mesurer au moins un paramètre physique. Le capteur peut être configuré comme transducteur, qui convertit un signal physique en un autre, p.ex. une contrainte mécanique en de l'électricité.

De nombreux types de capteurs sont connus. P.ex. un capteur de contrainte est décrit par B. Rue, B. Olbrechts, J. -. Raskin and D. Flandre, "A SOI CMOS smart strain sensor," IEEE 2011 International SOI Conference, Tempe, AZ, 2011, pp. 1-2. Un tel capteur de contrainte peut servir pour mesurer la déformation ou la contrainte d'un objet à surveiller.

Les tags RFID employés dans ces systèmes sont classiquement des tags passifs, à savoir qu'ils ne comportent pas de batterie ou de moyen de stockage d'énergie. Ces tags utilisent l'énergie contenue dans la porteuse du signal du lecteur pour renvoyer une version modulée du signal du lecteur vers le lecteur RFID. Au moins une partie de l'énergie du signal d'interrogation est récupérée par un dispositif de collecte d'énergie pour alimenter les composants du tag. Les tags passifs ont pour avantage d'être légers et peu onéreux et d'avoir une longue durée de vie.

Un tag RFID passif est décrit p.ex. dans le document FR3015729 (A1) ou par C. Felini et. al. « Fully RF Powered UHF-RFID Sensors Platform », Procedia Engineering 87 (2014) 1346 - 1349. Des tags RFID sont aussi connus de US20080136619A1, US20130099897A1, US6720866B1, CN104361388A, US9789738B2, ou US20100231407A1.

L'emploi combiné de signaux d'interrogation UHF et de tags passifs présente toutefois l'inconvénient d'avoir une distance de lecture faible (surtout dans les cas où le circuit est connecté avec un capteur), p.ex. de moins de 20 cm, car l'énergie récupérée par le tag passif est limitée. Dans ce contexte, l'utilisation d'un capteur externe connecté avec le circuit par une interface peut consommer la plupart de l'énergie, surtout si ce capteur comprend de l'électronique discrète (ou des composants numériques), l'interface est une interface numérique (p.ex. SPI ou I2C), et/ou le canal pour acquérir le signal du capteur externe consomme trop d'énergie.

Par ailleurs, le temps de lecture peut être très long, p.ex. durer plus de 500ms. En outre, un système comprenant un circuit et un capteur externe connecté par une interface peut avoir une masse et une taille élevées, si une interface numérique est utilisée.

Le document WO 2019/005043 décrit un circuit pour étiquette RFID passive fonctionnant selon les standards HF-NFC. Le document US 2015/347791 décrit un circuit pour étiquette RFID passive fonctionnant dans une bande UHF. Le document WO 00/45331 divulgue un circuit pour étiquette RFID passive comprenant un capteur de poids de type piézoélectrique ou un capteur de température ou un biocapteur.

### Exposé de l'invention

L'invention a pour but de pallier tout ou partie des inconvénients précités, notamment de permettre une mesure de contrainte rapide et avec une consommation d'énergie réduite. D'ailleurs l'invention a pour but de permettre une distance de lecture élevée, p.ex. jusqu'à 5 mètres, et un dispositif sans contact comprenant un circuit et un capteur externe connecté par une interface avec des dimensions réduites. En outre, l'invention a pour but la conformité avec le protocole EPC UHF Gen2 Air Interface.

A cet effet, l'invention propose un circuit pour étiquette de radio-identification passive fonctionnant dans une bande UHF, configuré pour une communication radio avec un lecteur qui émet un signal de lecture. Le circuit est réalisé comme une seule puce, comprenant un ou plusieurs transducteurs pour mesurer une contrainte, un premier sous-circuit configuré pour l'acquisition de la mesure du transducteur et un deuxième sous-circuit configuré pour la transmission radio de la mesure acquise au lecteur.

La puce (en anglais « chip » ou « die ») peut être considérée comme un seul circuit intégré et/ou une monopuce et/ou le transducteur, le premier sous-circuit et le deuxième sous-circuit sont intégrés dans la puce (dans le même circuit intégré).

Par conséquent, grâce à l'intégration de transducteur ensemble avec le premier sous-circuit et le deuxième sous-circuit dans la puce, les mesures peuvent être acquises et transmises au lecteur plus rapidement (p.ex. pendant 1500µs ou moins) avec une consommation d'énergie réduite (p.ex. 1µA ou moins). Donc, il est possible d'élever la distance de lecture (surtout grâce à la consommation réduite), p.ex. jusqu'à 5 mètres, et de réduire les dimensions (la taille) du dispositif sans contact.

Le transducteur peut être considéré comme un capteur de contrainte, p.ex. d'un type piézorésistif, et/ou le transducteur peut être configuré pour mesurer une contrainte mécanique appliquée au circuit, et/ou le transducteur peut comprendre au moins un capteur de contrainte qui est réalisé par deux transistors sensibles à la contrainte orthogonaux, et/ou le transducteur peut comprendre au moins un capteur de contrainte à variation de courant positif et au moins un capteur de contrainte à variation de courant négatif, et/ou le transducteur peut comprendre deux ou plus capteurs de contrainte en séries.

L'utilisation des transistors orthogonaux permet de mesurer la contrainte subie par le composant suivant les deux directions dans le plan X et Y.

Notamment le transducteur peut comprendre au moins un (tel) capteur de contrainte à variation de courant positif et au moins un (tel) capteur de contrainte à variation de courant négatif.

Par exemple, le transducteur peut comprendre deux ou plus capteurs de contrainte à variation de courant positif en série et deux ou plus capteurs de contrainte à variation de courant négatif en série.

L'utilisation des capteurs de contrainte en série permettent d'améliorer (de multiplier) la sensibilité du transducteur pour mesurer la contrainte.

Le premier sous-circuit peut comprendre un (premier) élément configuré pour alimenter le transducteur avec un courant d'alimentation. Cet élément peut mettre en place un courant de polarisation, optionnellement avec un gain de courant prédéterminé.

Le premier sous-circuit peut d'ailleurs comprendre un (deuxième) élément configuré pour effectuer une annulation du courant de mode commun du signal de sortie du transducteur (en anglais « common mode current cancellation ») ou de chaque capteur de contrainte à variation de courant positif/négatif. Cela permet qu'on ne prenne en compte que le courant causé par la variation du signal du transducteur, à l'exclusion du mode commun. Donc, la plage du signal de mesure peut être augmentée.

Au cas où le transducteur comprend un capteur de contrainte à variation de courant positif et un capteur de contrainte à variation de courant négatif, le premier sous-circuit peut comprendre un (troisième) élément configuré pour créer un signal différentiel entre les signaux de sortie de ces deux capteurs de contrainte, notamment après l'annulation respective du courant de mode commun. Cela permet d'augmenter la plage du signal de mesure additionnellement.

Le premier sous-circuit peut comprendre un convertisseur I/V configuré pour convertir le signal de sortie du transducteur ou pour convertir le signal différentiel.

Le convertisseur I/V peut être configuré pour convertir un signal en courant à un signal en tension.

Le convertisseur I/V peut être un convertisseur passif et configuré pour créer un signal en tension différentiel.

Le convertisseur permet donc, qu'un signal en tension soit pris en compte au lieu du signal en courant original.

Le premier sous-circuit peut comprendre un convertisseur analogique-numérique (ADC) configuré pour numériser la mesure du transducteur, notamment le signal de sortie du convertisseur I/V. Ce signal numérisé peut être reçu par un dispositif de commande du circuit (et/ou du deuxième sous-circuit), qui peut le transmettre (p.ex. par une antenne) au lecteur.

Le lecteur peut émettre un signal de lecture périodique comprenant une phase de récupération de l'énergie et une phase de communication. Le circuit, notamment le deuxième sous-circuit, peut comprendre : un dispositif de commande configuré pour accumuler une réserve d'énergie à partir de l'onde radio pendant la phase de récupération de l'énergie et pour communiquer avec le lecteur pendant la phase de communication, dans lequel la phase de récupération de l'énergie comprend une phase d'acquisition pendant laquelle le circuit alimente le transducteur et acquiert, convertit I/V, et numérise la mesure du transducteur.

Le dispositif de commande peut être configuré en outre pour transmettre la mesure du transducteur numérisée au lecteur pendant la phase de communication de la même période.

Grâce à la possibilité d'acquérir, de convertir et de numériser la mesure pendant la phase d'acquisition, qui est pendant la phase de récupération de l'énergie et donc avant la phase de communication et donc dans une seule période du signal de lecture périodique, cette mesure peut être transmise au lecteur directement au cours de cette phase de communication, c'est-à-dire pendant la même période. Par conséquent le délai de réponse du circuit peut être réduit. Il est donc possible de lire (interroger) plusieurs circuits externes très rapidement. Par exemple, des objets comprenant des circuits selon l'invention peuvent être positionnés ensemble dans une caisse et être lus chacun très rapidement.

Le circuit peut comprendre en outre une interface pour connecter (au moins) un capteur analogique externe. L'interface peut comprendre : une connexion électrique configurée pour connecter et alimenter en électricité le capteur analogique externe et pour acquérir la mesure analogique du capteur, et un amplificateur configuré pour amplifier le signal de la mesure analogique du capteur. Le convertisseur analogique-numérique (ADC) peut être configuré pour numériser la mesure analogique amplifiée du capteur. La phase de récupération de l'énergie peut comprendre une phase d'acquisition pendant laquelle l'interface alimente le capteur analogique externe, acquiert, amplifie et numérise la mesure du capteur.

Le dispositif de commande peut être en outre configuré pour : alimenter l'interface pour acquérir la mesure amplifiée et numérisée pendant la phase d'acquisition, et transférer la mesure amplifiée et numérisée au lecteur pendant la phase de communication de la même période.

Par conséquent, grâce à une telle interface, un capteur analogique peut être connecté directement avec le circuit, qui consomme moins d'énergie qu'un capteur numérique qui comprend des éléments/circuits électroniques additionnels. En outre grâce à la possibilité d'acquérir, d'amplifier et de numériser la mesure du capteur pendant la phase d'acquisition, qui est pendant la phase de récupération de l'énergie et donc avant la phase de communication et donc dans une seule période du signal de lecture périodique, cette mesure peut être transmise au lecteur directement au cours de cette phase de communication, c'est-à-dire pendant la même période. Par conséquent le délai de réponse du circuit peut être réduit. Il est donc possible de lire (interroger) plusieurs circuits externes très rapidement. Par exemple, des objets comprenant des circuits selon l'invention peuvent être positionnés ensemble dans une caisse et être lus chacun très rapidement. Selon un autre exemple il est possible de mesurer la pression d'un pneu au passage du véhicule devant un portique.

Le dispositif de commande peut être configuré pour : démarrer pendant une phase de démarrage, la phase de démarrage étant avant la phase d'acquisition et pendant la même phase de récupération de l'énergie.

La phase de récupération de l'énergie peut comprendre en outre avant la phase de démarrage une phase de récupération de l'énergie initiale, pendant laquelle le circuit est éteint et exclusivement accumule une réserve d'énergie à partir de l'onde radio.

Par conséquent, un démarrage fiable peut être assuré, car le niveau d'énergie accumulé est suffisamment élevé.

La phase de récupération de l'énergie peut comprendre en outre entre la phase de démarrage et la phase d'acquisition une première phase de récupération de l'énergie intermédiaire, pendant laquelle le circuit est éteint et exclusivement accumule une réserve d'énergie à partir de l'onde radio.

Par conséquent, une acquisition fiable de la mesure peut être assurée, car le niveau d'énergie accumulé est suffisamment élevé.

La phase de récupération de l'énergie peut comprendre en outre après la phase d'acquisition et avant la phase de communication une deuxième phase de récupération de l'énergie intermédiaire, pendant laquelle le circuit est éteint et exclusivement accumule une réserve d'énergie à partir de l'onde radio.

Par conséquent, une transmission fiable de la mesure au lecteur peut être assurée, car le niveau d'énergie accumulé est suffisamment élevé.

Le dispositif de commande est optionnellement configuré pour alimenter l'interface exclusivement pendant la phase d'acquisition.

Par conséquent, le capteur analogique peut être alimenté par l'interface. D'ailleurs, si l'interface est exclusivement activée pendant la phase d'acquisition, la consommation d'énergie peut être réduite.

Le dispositif de commande est optionnellement configuré pour alimenter les éléments de l'interface en électricité séquentiellement, p.ex. pour alimenter le capteur analogique, l'amplificateur et le convertisseur analogique-numérique (ADC) séquentiellement.

Par conséquent, comme chaque élément est alimenté exclusivement au moment nécessaire pour effectuer la mesure, la consommation instantanée d'énergie peut être réduite.

Le dispositif de commande peut donc être configuré pour alimenter : d'abord exclusivement la connexion électrique pour alimenter le capteur analogique externe et acquérir la mesure analogique du capteur, après exclusivement l'amplificateur pour amplifier le signal de la mesure analogique du capteur, et après exclusivement le convertisseur analogique-numérique (ADC) pour numériser la mesure analogique amplifiée du capteur.

Après la numérisation de la mesure par le convertisseur analogique-numérique (ADC) et pendant la phase d'acquisition, la mesure numérisée est lue et mémorisée par le dispositif de commande.

Donc, la mesure est prête au début de la phase de communication pour être transférée au lecteur.

Le circuit est par exemple compatible avec (ou communique selon) le protocole EPC UHF Gen2 Air Interface.

L'invention propose d'ailleurs un système de radio-identification passive fonctionnant dans une bande UHF comprenant : un lecteur configuré pour émettre un signal de lecture périodique, une période du signal de lecture comprenant une phase de récupération de l'énergie et une phase de communication, et un circuit comme décrit ci-dessus.

L'invention propose d'ailleurs un procédé pour fabriquer un circuit pour étiquette de radio-identification passive fonctionnant dans une bande UHF, configuré pour une communication radio avec un lecteur qui émet un signal de lecture, dans lequel le circuit est fabriqué comme une seule puce, comprenant au moins un transducteur pour mesurer une contrainte, un premier sous-circuit pour l'acquisition de la mesure du transducteur et un deuxième sous-circuit pour la transmission radio de la mesure acquise au lecteur.

Le circuit fabriqué peut en outre avoir les caractéristiques décrites ci-dessus au contexte du dispositif sans contact.

Les caractéristiques et avantages de l'invention apparaitront à la lecture de la description qui va suivre, donnée uniquement à titre d'exemple non limitatif, et faite en référence aux dessins annexés.

### Brève description des dessins

[Fig. 1] La figure 1 est une vue schématique d'une architecture d'un circuit selon l'invention,
[Fig. 2] La figure 2 est une vue schématique d'un circuit de transducteur selon l'invention,
[Fig. 3] La figure 3 est une vue schématique d'un diagramme de la phase de récupération de l'énergie selon l'invention, et
[Fig. 4] La figure 4 est une vue schématique d'un diagramme de la phase d'acquisition de l'énergie ACQ selon l'invention.

### Description des modes de réalisation

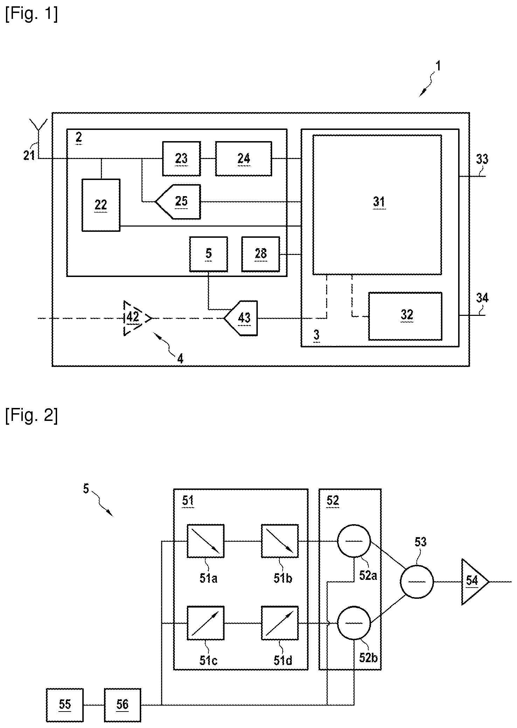

La figure 1 est une vue schématique d'une architecture d'un circuit 1 selon l'invention. Le circuit 1 est du type RFID (de l'anglais « Radio Frequency Identification ») fonctionnant dans une bande UHF et peut servir comme radio-étiquette (ou « RFID tag » en anglais). Le circuit est par exemple compatible avec (ou communique selon) le protocole EPC UHF Gen2 Air Interface.

Le circuit se présente p.ex. sous la forme d'une étiquette autocollante collée sur l'objet à surveiller ou encore sous la forme d'une puce intégrée dans l'objet à surveiller. L'objet à surveiller est par exemple une marchandise, un produit ou un organisme vivant dont la surveillance à travers au moins un paramètre physique mesuré est nécessaire, notamment d'une contrainte mécanique (une tension, déformation, ou stress) appliquée à l'objet et donc au circuit.

Le circuit est réalisé comme une seule puce, c'est-à-dire comme un circuit intégré ou un « die ».

Le circuit 1 fonctionne d'une manière passive, à savoir qu'il ne comporte pas de batterie ou de moyen de stockage d'énergie. En revanche, il utilise l'énergie contenue dans la porteuse du signal du lecteur pour renvoyer une version modulée du signal du lecteur vers le lecteur RFID. Au moins une partie de l'énergie du signal d'interrogation est récupérée par un dispositif de collecte d'énergie pour alimenter les composants du circuit. En détails :
Le circuit 1 comprend un module analogique 2 qui est connecté avec une antenne 21 pour récupérer l'énergie reçue avec l'antenne par l'onde radio émise par un lecteur externe et pour recevoir et transmettre les signaux de communication.

Le module analogique 2 comprend à cet effet une unité de modulation 22 (p.ex. pour transmettre des signaux de communication). Il comprend en outre une unité de démodulation 25 (p.ex. pour recevoir des signaux de communication). Il comprend d'ailleurs une unité de rectification 23 et une unité de régulation d'alimentation 24 pour procéder et/ou pour accumuler une réserve d'énergie à partir de l'onde radio pendant la phase de récupération de l'énergie. L'unité de rectification 23 peut effectuer une conversion énergie radio en énergie continue pour alimenter le circuit. En outre, l'unité de régulation d'alimentation 24 peut effectuer la génération de courant continu pour alimenter le transducteur avec un courant de polarisation (en anglais « bias current ») (optionnellement avec un gain de courant prédéterminé) et optionnellement aussi d'une tension continue « propre » pour alimenter l'interface 4. Par exemple, l'énergie accumulée peut être stockée dans une capacité (p.ex. un condensateur).

Le module analogique 2 est connecté avec un module digital 3 (ou dispositif de commande 3). Ce module digital 3 comprend un processeur et/ou une unité de mémorisation 31 apte à traiter des données et/ou stocker des mesures acquises par le transducteur et/ou d'un capteur analogique externe. En outre, le module digital 3 comprend optionnellement une interface digitale 32, 34, par exemple un SPI ou I2C, et/ou une interface d'interruption 33. Le module digital 3 contrôle le module analogique 2, par exemple pour être alimenté avec de l'énergie accumulée et pour communiquer avec le lecteur par l'antenne 21. L'accumulation, consommation et stockage de l'énergie est donc contrôlée par le module digital 3 (cf. explication pour la fig. 2 ci-dessous).

Le module analogique 2 et le module digital 3 peuvent former ensemble le deuxième sous-circuit selon l'invention pour la transmission radio de la mesure du transducteur au lecteur.

Le circuit 1, par exemple le module analogique 2, comprend d'ailleurs un transducteur (ou circuit de transducteur) 5 pour mesurer une contrainte. Le transducteur est donc intégré dans la puce du circuit. Le transducteur peut être un capteur de contrainte réalisé par deux transistors sensibles à la contrainte orthogonaux, par exemple du type piézo-résistif. Le transducteur et un (premier) sous-circuit pour l'acquisition de la mesure du transducteur sont décrits en détails en liaison avec la figure 2.

Le circuit comprend en outre un convertisseur analogique-numérique (ADC) 43 configuré pour numériser la mesure analogique amplifiée du transducteur ou notamment du (premier) sous-circuit. Le signal qui sort du convertisseur 43 est envoyé au module digital 3 pour être stocké et transmis au lecteur. Le convertisseur peut être connecté à un oscillateur 28 pour recevoir un signal d'horloge « CLK ».

Le circuit peut comprendre encore d'autres capteurs analogiques internes (p.ex. pour mesurer la température), qui sont par exemple connectés au convertisseur 43.

Le module digital 3 est d'ailleurs optionnellement connecté avec une interface (ou module d'interface) 4. L'interface 4 comprend une connexion électrique 41 configurée pour connecter et alimenter en électricité un capteur analogique externe et pour acquérir la mesure analogique du capteur. Elle comprend de plus un amplificateur 42 configuré pour amplifier le signal de la mesure analogique du capteur. Le convertisseur analogique-numérique (ADC) 43 est configuré pour numériser aussi la mesure analogique amplifiée du capteur.

La figure 2 est une vue schématique d'un circuit de transducteur selon l'invention.

Comme illustré dans la figure 2, le transducteur 51 peut comprendre au moins un capteur de contrainte qui est réalisé par deux transistors sensibles à la contrainte orthogonaux. Notamment, dans l'exemple de la fig. 2, le transducteur comprend deux (ou plus) capteurs de contrainte à variation de courant positif 51c, 51d en série et deux (ou plus capteurs) de contrainte à variation de courant négatif 51a, 51b en série.

Le circuit 1, par exemple module analogique 2, comprend un élément 55 pour mettre en place un courant de polarisation et un élément 56 pour appliquer un gain au courant de polarisation. Ces éléments 55, 56 alimentent le transducteur avec ce courant d'alimentation. Ces éléments 55, 56 peuvent former ensemble le premier élément de l'invention.

Le circuit 1, par exemple module analogique 2, comprend d'ailleurs un deuxième élément 52 configuré pour effectuer une annulation du courant de mode commun du signal de sortie du transducteur 51 (en anglais « common mode current cancellation »). Dans ce but l'élément comprend deux sous-éléments 52a, 52b.Cela permet qu'on ne prenne en compte que le courant causé par la variation du signal du transducteur, à l'exclusion du mode commun. Donc, la plage du signal de mesure peut être augmentée.

Le circuit 1, par exemple module analogique 2, comprend d'ailleurs un troisième élément 53 configuré pour créer un signal différentiel entre les signaux de sortie des deux capteurs de contrainte orthogonaux, notamment après l'annulation respective du courant de mode commun par l'élément 52. Cela permet d'augmenter la plage du signal de mesure additionnellement.

Le circuit 1, par exemple module analogique 2, comprend d'ailleurs un convertisseur courant/tension I/V 54 configuré pour convertir le signal de sortie différentiel de l'élément 53 pour convertir un signal en courant à un signal en tension. Le convertisseur I/V 54 peut être un convertisseur passif et configuré pour créer un signal en tension différentiel. Le convertisseur permet donc qu'un signal en tension soit pris en compte au lieu du signal en courant original. Le signal de sortie du convertisseur I/V 54 est transmis au convertisseur analogique-numérique (ADC) 43.

Les éléments 55, 56, 52, 53, le convertisseur I/V 54 et le convertisseur analogique-numérique (ADC) 43 peuvent former ensemble le premier sous-circuit configuré pour l'acquisition de la mesure du transducteur selon l'invention.

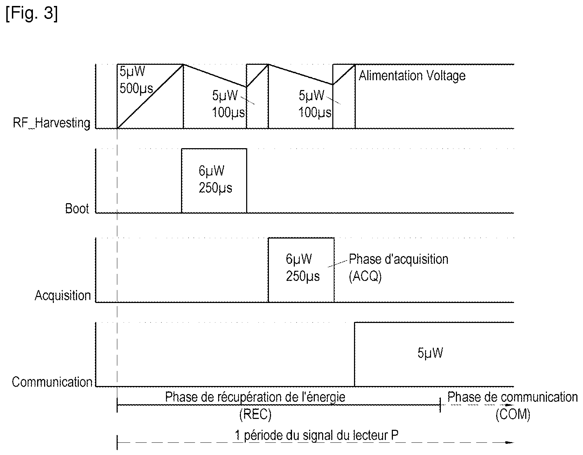

La figure 3 est une vue schématique d'un diagramme de la phase de récupération de l'énergie selon l'invention. Le diagramme indique quatre activités (ou 4 sous-diagrammes), dont les axes X indiquent le temps.

Le lecteur externe émet un signal de lecture périodique. Une période P du signal de lecture comprend une phase de récupération de l'énergie REC et une phase de communication COM. Dans la phase de récupération de l'énergie REC une réserve d'énergie est accumulée à partir de l'onde radio du lecteur externe. La phase de récupération de l'énergie REC comprend les phases décrites ci-dessous.

Comme indiqué dans le sous-diagramme « RF_Harvesting », l'énergie stockée monte dans une phase de récupération de l'énergie initiale (p.ex. à 5 micro-Watt pendant 500 micro-secondes), car aucun élément ou unité du circuit n'est actif et donc toute l'énergie est stockée.

Après, c'est-à-dire quand assez d'énergie est stockée pour permettre une opération fiable, le module digital 3 est démarré pendant une phase de démarrage (« Boot ») (p.ex. avec une consommation de 6 micro-Watt pendant 250 micro-secondes). Dans le même temps, à cause de cette opération du module digital 3, l'énergie stockée se réduit.

Pour cette raison, après la phase de démarrage, la phase de récupération de l'énergie comprend une première phase de récupération de l'énergie intermédiaire, dans laquelle l'énergie stockée augmente de nouveau (p.ex. à 5 micro-Watt pendant 100 micro-secondes), car aucun élément ou unité du circuit n'est actif et donc toute l'énergie est stockée.

Après, c'est-à-dire quand assez d'énergie est stockée pour permettre une opération fiable, la mesure du transducteur 51 est acquise et numérisée (et optionnellement l'interface 4 alimente un capteur analogique externe, acquiert, amplifie et numérise la mesure du capteur) pendant la phase d'acquisition (« Aquisition ») (par exemple avec une consommation de 6 micro-Watt pendant 250 micro-secondes). Dans le même temps, à cause de cette opération du module digital 3, l'énergie stockée se réduit.

Pour cette raison, après la phase d'acquisition, la phase de récupération de l'énergie comprend une deuxième phase de récupération de l'énergie intermédiaire, dans laquelle l'énergie stockée monte de nouveau (par exemple à 5 micro-Watt pendant 100 micro-secondes), car aucun élément ou unité du circuit n'est actif et donc toute l'énergie est stockée.

Après, (ou après encore un délai prédéfini) la phase de récupération de l'énergie peut être terminée et la phase de communication COM peut commencer. Pendant la phase de communication, c'est-à-dire pendant la même période, la mesure est transférée au lecteur externe.

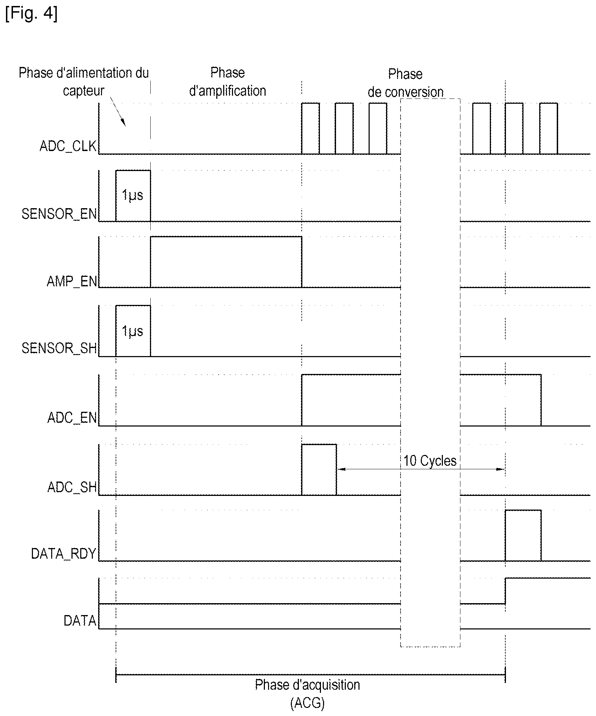

La figure 4 est une vue schématique d'un diagramme de la phase d'acquisition de l'énergie ACQ selon l'invention. Le diagramme indique huit activités (ou 8 sous-diagrammes), dont les axes X indiquent le temps. Pendant la phase d'acquisition de l'énergie ACQ, les éléments de l'interface 4 sont alimentés en électricité séquentiellement. Comme indiqué dans le sous-diagramme « SENSOR_EN » au début seulement le transducteur 51 (et optionnellement la connexion électrique et donc le capteur analogique externe) est alimenté avec de l'énergie (par exemple pendant 1 micro-secondes) et le signal généré par le transducteur (et optionnellement du capteur) est lu et échantillonné. Après, comme phase optionnelle, exclusivement l'amplificateur 42 est alimenté pour amplifier le signal de la mesure analogique du capteur (cf. sous-diagramme « AMP_EN »). En suivant, uniquement le convertisseur analogique-numérique (ADC) 43 est alimenté pour numériser la mesure analogique (cf. sous-diagramme « ADC_EN »). Après la numérisation de la mesure par le convertisseur analogique-numérique (ADC) et préférablement encore pendant la phase d'acquisition, la mesure numérisée est lue et mémorisée par le processeur 31, et donc mise à disposition par le module digital 3 (cf. sous-diagramme « DATA_RDY »).

A cause de cette opération séquentielle, la consommation totale pour acquérir la mesure amplifiée et numérisée peut être réduite, p.ex. à 1 micro-Watt. Pour cette raison, l'acquisition et la transmission de la mesure peuvent être effectuées pendant une seule période du signal du lecteur.

## Revendications

1. Circuit (1) pour étiquette de radio-identification passive
fonctionnant dans une bande UHF, configuré pour une communication radio avec un lecteur qui émet un signal de lecture, **caractérisé en ce que** le circuit est réalisé comme une seule puce, la puce constituant un seul circuit intégré et / ou une monopuce, et le circuit comprenant au moins un transducteur (51) comprenant au moins un capteur de contrainte mécanique pour mesurer une contrainte, un premier sous-circuit (52, 53, 54, 55, 56, 43) configuré pour l'acquisition de la mesure du transducteur et un deuxième sous-circuit (2, 3) configuré pour la transmission radio de la mesure acquise au lecteur, le transducteur comprenant au moins un capteur de contrainte qui est réalisé par deux transistors sensibles à la contrainte orthogonaux.

2. Circuit selon la revendication 1, dans lequel le premier sous-circuit comprend un élément (55, 56) configuré pour alimenter le transducteur avec un courant d'alimentation.

3. Circuit selon l'une des revendications 1 et 2, dans lequel le premier sous-circuit comprend un élément (52) configuré pour effectuer une annulation du courant de mode commun du signal de sortie du transducteur.

4. Circuit selon la revendication 3, dans lequel au cas où le transducteur comprend un capteur de contrainte à variation de courant positif et un capteur de contrainte à variation de courant négatif, le premier sous-circuit comprend un élément (53) configuré pour créer un signal différentiel entre les signaux de sortie des deux capteurs de contrainte positif et négatif, notamment après l'annulation respective du courant de mode commun.

5. Circuit selon la revendication 4, dans lequel le premier sous-circuit comprend un convertisseur I/V (54) configuré pour convertir le signal de sortie du transducteur ou pour convertir le signal différentiel.

6. Circuit selon la revendication 5, dans lequel le convertisseur I/V est configuré pour convertir un signal en courant à un signal en tension, et/ou le convertisseur I/V est un convertisseur passif et configuré pour créer un signal en tension différentiel.

7. Circuit selon l'une des revendications 5 et 6, dans lequel le premier sous-circuit comprend un convertisseur analogique-numérique (ADC) (43) configuré pour numériser la mesure du transducteur, notamment le signal de sortie convertisseur I/V.

8. Circuit selon l'une quelconque des revendications précédentes, dans lequel
le lecteur émet un signal de lecture périodique comprenant une phase de récupération de l'énergie et une phase de communication, et
le circuit, notamment le deuxième sous-circuit, comprend :
- un dispositif de commande (31) configuré pour accumuler une réserve d'énergie à partir de l'onde radio pendant la phase de récupération de l'énergie et pour communiquer avec le lecteur pendant la phase de communication,
dans lequel la phase de récupération de l'énergie comprend une phase d'acquisition pendant laquelle le circuit alimente le transducteur (51) et acquiert, convertit I/V, et numérise la mesure du transducteur (51).

9. Circuit selon la revendication 8, dans lequel
le dispositif de commande (31) est en outre configuré pour :
transmettre la mesure du transducteur numérisée au lecteur pendant la phase de communication de la même période.

10. Circuit selon la revendication 9, dans lequel
le circuit comprend en outre une interface (4) pour connecter un capteur analogique externe, l'interface comprenant :
une connexion électrique configurée pour connecter et alimenter en électricité le capteur analogique externe et pour acquérir la mesure analogique du capteur analogique, et
un amplificateur (42) configuré pour amplifier le signal de la mesure analogique du capteur analogique, dans lequel
le convertisseur analogique-numérique (ADC) (43) est configuré pour numériser la mesure analogique amplifiée du capteur analogique, et
le dispositif de commande (31) est en outre configuré pour :
alimenter l'interface pour acquérir la mesure amplifiée et numérisée du capteur analogique pendant la phase d'acquisition, et
transmettre la mesure amplifiée et numérisée au lecteur pendant la phase de communication de la même période.

11. Circuit selon l'une quelconque des revendications 8 à 10, dans lequel
le dispositif de commande est configuré pour :
démarrer pendant une phase de démarrage, la phase de démarrage étant avant la phase d'acquisition et pendant la même phase de récupération de l'énergie.

12. Circuit selon la revendication 11, dans lequel
la phase de récupération de l'énergie comprend en outre avant la phase de démarrage une phase de récupération de l'énergie initiale, pendant laquelle le circuit est éteint et exclusivement accumule une réserve d'énergie à partir de l'onde radio.

13. Circuit selon l'une des revendications 9 et 10, dans lequel la phase de récupération de l'énergie comprend en outre entre la phase de démarrage et la phase d'acquisition une première phase de récupération de l'énergie intermédiaire, pendant laquelle le circuit est éteint et exclusivement accumule une réserve d'énergie à partir de l'onde radio.

14. Circuit selon l'une quelconque des revendications 9 à 11, dans lequel
la phase de récupération de l'énergie comprend en outre après la phase d'acquisition et avant la phase de communication une deuxième phase de récupération de l'énergie intermédiaire, pendant laquelle le circuit est éteint et exclusivement accumule une réserve d'énergie à partir de l'onde radio.

15. Circuit selon la revendication 8, dans lequel
le dispositif de commande est configuré pour alimenter l'interface exclusivement pendant la phase d'acquisition.

16. Système de radio-identification passive fonctionnant dans une bande UHF comprenant :
un lecteur configuré pour émettre un signal de lecture, une période du signal de lecture comprenant une phase de récupération de l'énergie et une phase de communication, et
un circuit selon l'une quelconque des revendications précédentes.

17. Procédé pour fabriquer un circuit (1) pour étiquette de radio-identification passive fonctionnant dans une bande UHF, selon l'une des revendications 1 à 15, configuré pour
une communication radio avec un lecteur qui émet un signal de lecture, **caractérisé en ce que**
le circuit est fabriqué comme une seule puce, comprenant au moins un transducteur (51) pour mesurer une contrainte, un premier sous-circuit (52, 53, 54, 43) pour l'acquisition de la mesure du transducteur et un deuxième sous-circuit (2, 3) pour la transmission radio de la mesure acquise au lecteur.

## Patentansprüche

1. Schaltung (1) für eine passive Radiofrequenzidentifikation, die in einem UHF-Band arbeitet, die für eine Funkkommunikation mit einer Lesevorrichtung konfiguriert ist, die ein Lesesignal aussendet, **dadurch gekennzeichnet, dass** die Schaltung als ein einzelner Chip hergestellt ist, wobei der Chip einen einzelnen integrierten Schaltkreis und/oder einen Einzelchip darstellt, und wobei die Schaltung mindestens einen Wandler (51) umfasst, der mindestens einen mechanischen Dehnungssensor umfasst, um eine Dehnung zu messen, eine erste Teilschaltung (52, 53, 54, 55, 56, 43), die konfiguriert ist, um die Messung des Wandlers zu erfassen, und eine zweite Teilschaltung (2, 3), die konfiguriert ist, um die Funkübertragung der erfassten Messung an die Lesevorrichtung durchzuführen, wobei der Wandler mindestens einen Dehnungssensor umfasst, der durch zwei orthogonale dehnungsempfindliche Transistoren ausgeführt wird.

2. Schaltung nach Anspruch 1, wobei die erste Teilschaltung ein Element (55, 56) umfasst, das konfiguriert ist, um den Wandler mit Versorgungsstrom zu versorgen.

3. Schaltung nach einem der Ansprüche 1 und 2, wobei die erste Teilschaltung ein Element (52) umfasst, das konfiguriert ist, um eine Gleichtaktstromunterdrückung des Ausgangssignals des Wandlers durchzuführen.

4. Schaltung nach Anspruch 3, wobei für den Fall, dass der Wandler einen Dehnungssensor mit positiver Stromvariation und einen Dehnungssensor mit negativer Stromvariation umfasst, die erste Teilschaltung ein Element (53) umfasst, das konfiguriert ist, um ein Differenzsignal zwischen den Ausgangssignalen der zwei positiven und negativen Dehnungssensoren zu erzeugen, insbesondere nach der jeweiligen Gleichtaktstromunterdrückung.

5. Schaltung nach Anspruch 4, wobei die erste Teilschaltung einen I/V-Wandler (54) umfasst, der konfiguriert ist, um das Ausgangssignal des Wandlers umzuwandeln oder um das Differenzsignal umzuwandeln.

6. Schaltung nach Anspruch 5, wobei der I/V-Wandler konfiguriert ist, um ein Stromsignal in ein Spannungssignal umzuwandeln und/oder der I/V-Wandler ein passiver Wandler ist und konfiguriert ist, um ein Differenzspannungssignal zu erzeugen.

7. Schaltung nach einem der Ansprüche 5 und 6, wobei die erste Teilschaltung einen Analog-Digital-Wandler (ADC) (43) umfasst, der konfiguriert ist, um die Messung des Wandlers zu digitalisieren, insbesondere das Ausgangssignal des I/V-Wandlers.

8. Schalter nach einem der vorhergehenden Ansprüche, wobei die Lesevorrichtung ein periodisches Lesesignal aussendet, das eine Energierückgewinnungsphase und eine Kommunikationsphase umfasst, und wobei die Schaltung, insbesondere die zweite Teilschaltung, Folgendes umfasst:
- eine Steuervorrichtung (31), die konfiguriert ist, um eine Energiereserve aus der Funkwelle während der Energierückgewinnungsphase aufzubauen, und um mit der Lesevorrichtung während der Kommunikationsphase zu kommunizieren,
wobei die Energierückgewinnungsphase eine Erfassungsphase umfasst, während der die Schaltung den Wandler (51) mit Strom versorgt und die Messung des Wandlers (51) erfasst, I/V-wandelt und digitalisiert.

9. Schaltung nach Anspruch 8, wobei die Steuervorrichtung (31) außerdem konfiguriert ist, um
die digitalisierte Messung des Wandlers während der Kommunikationsphase desselben Zeitraums an die Lesevorrichtung zu übertragen.

10. Schaltung nach Anspruch 9, wobei die Schaltung außerdem eine Schnittstelle (4) umfasst, um einen externen Analogsensor zu verbinden, wobei die Schnittstelle Folgendes umfasst:
eine elektrische Verbindung, die konfiguriert ist, um den externen Analogsensor zu verbinden und mit Strom zu versorgen und um die analoge Messung des Analogsensors zu erfassen, und
einen Verstärker (42), der konfiguriert ist, um das Signal der analogen Messung des Analogsensors zu verstärken, wobei
der Analog-Digital-Wandler (ADC) (43) konfiguriert ist, um die verstärkte analoge Messung des Analogsensors zu digitalisieren, und die Steuereinheit (31) außerdem konfiguriert ist, um
die Schnittstelle zu versorgen, um die verstärkte und digitalisierte Messung des Analogsensors während der Erfassungsphase zu erfassen, und
die verstärkte und digitalisierte Messung während der Kommunikationsphase desselben Zeitraums an die Lesevorrichtung zu übertragen.

11. Schaltung nach einem der Ansprüche 8 bis 10, wobei die Steuervorrichtung konfiguriert ist, um:
während einer Startphase zu starten, wobei die Startphase vor der Erfassungsphase und während derselben Energierückgewinnungsphase erfolgt.

12. Schaltung nach Anspruch 11, wobei die Energierückgewinnungsphase außerdem vor der Startphase eine anfängliche Energierückgewinnungsphase umfasst, während der die Schaltung ausgeschaltet ist und ausschließlich eine Energiereserve aus der Funkwelle aufbaut.

13. Schaltung nach einem der Ansprüche 9 und 10, wobei die Energierückgewinnungsphase außerdem zwischen der Startphase und der Erfassungsphase eine erste Zwischenenergierückgewinnungsphase umfasst, während der die Schaltung ausgeschaltet ist und ausschließlich eine Energiereserve aus der Funkwelle aufbaut.

14. Schaltung nach einem der Ansprüche 9 bis 11, wobei die Energierückgewinnungsphase außerdem nach der Erfassungsphase und vor der Kommunikationsphase eine zweite Zwischenenergierückgewinnungsphase umfasst, während der die Schaltung ausgeschaltet ist und ausschließlich eine Energiereserve aus der Funkwelle aufbaut.

15. Schaltung nach Anspruch 8, wobei die Steuervorrichtung konfiguriert ist, um die Schnittstelle ausschließlich während der Erfassungsphase zu versorgen.

16. Passives Radioidentifikationssystem, das in einem UHF-Band arbeitet und Folgendes umfasst:
eine Lesevorrichtung, die konfiguriert ist, um ein Lesesignal auszusenden, wobei eine Periode des Lesesignals eine Energierückgewinnungsphase und eine Kommunikationsphase umfasst, und
eine Schaltung nach einem der vorhergehenden Ansprüche.

17. Verfahren zur Herstellung einer Schaltung (1) für eine passive Radiofrequenzidentifikation, der in einem UHF-Band arbeitet, nach einem der Ansprüche 1 bis 15, die für eine Radiokommunikation mit einer Lesevorrichtung konfiguriert ist, die ein Lesesignal aussendet, **dadurch gekennzeichnet, dass** die Schaltung als ein einzelner Chip hergestellt ist, umfassend mindestens einen Wandler (51), um eine Dehnung zu messen, eine erste Teilschaltung (52, 53, 54, 43), um die Messung des Wandlers zu erfassen, und eine zweite Teilschaltung (2, 3), um die Funkübertragung der erfassten Messung an die Lesevorrichtung durchzuführen.

## Claims

1. A circuit (1) for a passive radio-identification tag operating in a UHF band, configured for a radio communication with a reader that emits a reading signal, **characterized in that** the circuit is produced as a single chip, the chip constituting a single integrated circuit and/or a single-chip, and the chip comprising at least one transducer (51) comprising at least one mechanical strain sensor for measuring a strain, a first sub-circuit (52, 53, 54, 55, 56, 43) configured for the acquisition of the transducer measurement and a second sub-circuit (2, 3) configured for the radio transmission of the acquired measurement to the reader, the transducer comprising at least one strain sensor which is embodied by two transistors sensitive to orthogonal strains.

2. The circuit according to claim 1, wherein the first sub-circuit comprises an element (55, 56) configured to supply the transducer with a supply current.

3. The circuit according to claim 1 or claim 2, wherein the first sub-circuit comprises an element (52) configured to perform a common mode current cancellation of the output signal of the transducer.

4. The circuit according to claim 3, wherein if the transducer comprises a positive current variation strain sensor and a negative current variation strain sensor, the first sub-circuit comprises an element (53) configured to create a differential signal between the output signals of these two positive and negative strain sensors, particularly after the respective cancellation of the common mode current.

5. The circuit according to claim 4, wherein the first sub-circuit comprises an I/V converter (54) configured to convert the output signal of the transducer or to convert the differential signal.

6. The circuit according to claim 5, wherein the I/V converter is configured to convert a current signal into a voltage signal, and/or the I/V converter is a passive converter and configured to create a differential voltage signal.

7. The circuit according to claim 5 or 6, wherein the first sub-circuit comprises an analog-to-digital converter (ADC) (43) configured to digitize the transducer measurement, in particular the output signal of the I/V converter.

8. The circuit according to any one of the preceding claims, wherein the reader emits a periodic reading signal comprising a power recovery phase and a communication phase, and
the circuit, particularly the second sub-circuit, comprises:
- a commanding device (31) configured to accumulate a power reserve from the radio wave during the power recovery phase and to communicate with the reader during the communication phase,
wherein the power recovery phase comprises an acquisition phase during which the circuit powers the transducer (51) and acquires, I/V converts, and digitizes the transducer measurement (51).

9. The circuit according to claim 8, wherein the commanding device (31) is further configured to:
transmit the measurement of the digitized transducer to the reader during the communication phase of the same period.

10. The circuit according to claim 9, wherein the circuit further comprises an interface (4) to connect an external analog sensor, the interface comprising:
an electrical connection configured to connect and supply electricity to the external analog sensor and to acquire the analog measurement of the analog sensor, and
an amplifier (42) configured to amplify the signal of the analog measurement of the analog sensor, wherein
the analog-to-digital converter (ADC) (43) is configured to digitize the amplified analog measurement of the analog sensor, and
the commanding device (31) is further configured to:
supply the interface to acquire the amplified and digitized measurement of the analog sensor during the acquisition phase, and
transmit and digitized measurement to the reader during the communication phase of the same period.

11. The circuit according to any of claims 8 to 10, wherein the commanding device is configured to:
boot during a boot phase, the boot phase being before the acquisition phase and during the same power recovery phase.

12. The circuit according to claim 11, wherein the power recovery phase further comprises before the boot phase a phase of recovery of the initial power, during which the circuit is switched off and exclusively accumulates a power reserve from the radio wave.

13. The circuit according to any one of claims 9 and 10, wherein the power recovery phase further comprises between the boot phase and the acquisition phase a first intermediate power recovery phase, during which the circuit is switched off and exclusively accumulates a power reserve from the radio wave.

14. The circuit according to any one of claims 9 to 11, wherein the power recovery phase further comprises after the acquisition phase and before the communication phase a second intermediate power recovery phase, during which the circuit is switched off and exclusively accumulates a power reserve from the radio wave.

15. The circuit according to claim 8, wherein the commanding device is configured to supply the interface exclusively during the acquisition phase.

16. A passive radio-identification system operating in a UHF band comprising:
a reader configured to emit a periodic reading signal, a period of the reading signal comprising a power recovery phase and a communication phase, and
a circuit according to any one of the preceding claims.

17. A method for manufacturing a circuit (1) for a passive radio frequency identification tag operating in a UHF band, according to any one of claims 1 to 15, configured for a radio communication with a reader which emits a reading signal, **characterized in that** the circuit is manufactured as a single chip, comprising at least one transducer (51) for measuring a strain, a first sub-circuit (52, 53, 54, 43) for acquiring the transducer measurement and a second sub-circuit (2, 3) for radio-transmitting the acquired measurement to the reader.
